# EUROPEAN PATENT APPLICATION

(11) **EP 4 300 645 A1**
(43) Date of publication of application: **03.01.2024**
(21) Application number: 22759422.3
(22) Date of filing: 15.02.2022
(51) Int. Cl.: H01M 10/04, H01M 50/107, H01M 50/534, H01M 50/538, H01M 50/545, H01M 50/548, H01M 50/566, H01M 50/586

(54) **CYLINDRICAL BATTERY AND MANUFACTURING METHOD FOR SAME**

(30) Priority: 26.02.2021 JP 2021030649
(71) Applicant: Panasonic Energy Co., Ltd., Osaka 570-8511 (JP)
(72) Inventor: HARAGUCHI, Shin, Kadoma-shi, Osaka 571-0057 (JP); OKUTANI, Oose, Kadoma-shi, Osaka 571-0057 (JP); OKIMOTO, Ryota, Kadoma-shi, Osaka 571-0057 (JP)
(74) Representative: Novagraaf International SA
(86) International application number: PCT/JP2022/005823
(87) International publication number: WO 2022/181383

(57) **Abstract**

A cylindrical battery (10) comprises: an outer can (16) having a bottomed cylinder shape; an electrode body (14) that is accommodated inside the outer can (16), and in which an elongated positive electrode (11) and an elongated negative electrode (12) having different polarities from each other are wound with a separator (13) interposed therebetween; a metal plate (19) that is disposed between the electrode body (14) and a bottom part (68) of the outer can (16); and a plurality of negative electrode lead parts (21) that extend from the negative electrode (12) towards the bottom part (68). A tip part (21a) of each negative electrode lead part (21) is sandwiched between the metal plate (19) and the bottom part (68), and is electrically connected to the bottom part (68).

## Description

### TECHNICAL FIELD

The present disclosure generally relates to a cylindrical battery and a method of manufacturing the same.

### BACKGROUND ART

As a conventional technique of a cylindrical battery, there has been known one disclosed in PATENT LITERATURE 1. The cylindrical battery comprises a negative electrode current collector disposed between an electrode assembly and an exterior housing can. In the cylindrical battery, a plurality of negative leads that protrude from a negative electrode of the electrode assembly are welded to a surface on an electrode assembly side of the negative electrode current collector. A portion of the negative electrode current collector is provided with a protrusion protruding toward a bottom of the exterior housing can, and the protrusion is disposed in a recess provided in an inner surface of a bottom, thereby electrically connecting the negative electrode current collector to the exterior housing can.

### CITATION LIST

### PATENT LITERATURE

PATENT LITERATURE 1: Japanese Unexamined Patent Application Publication No. 2001-126708

### SUMMARY

### TECHNICAL PROBLEM

In the above-described cylindrical battery, the negative electrode leads are electrically connected to the exterior housing can via the negative electrode current collector, and therefore interposition of the negative electrode current collector causes an increase in electric resistance. Thus, it is an advantage of the present disclosure to provide a cylindrical battery that can reduce internal resistance.

### SOLUTION TO PROBLEM

In order to solve the above-described problem, a cylindrical battery according to the present disclosure comprises a bottomed cylindrical exterior housing can, an electrode assembly that is housed in the exterior housing can, and in which an elongated first electrode and an elongated second electrode having different polarities from each other are wound with a separator interposed between the first electrode and the second electrode, a metal plate that is disposed between a bottom of the exterior housing can and the electrode assembly, and a plurality of second electrode lead parts that extend from the second electrode toward the bottom, wherein a tip portion of each second electrode lead part is sandwiched between the metal plate and the bottom and is electrically connected to the bottom.

### ADVANTAGEOUS EFFECT OF INVENTION

In the cylindrical battery according to the present disclosure, the plurality of second electrode lead parts can be electrically connected to the exterior housing can not via the metal plate, which makes it possible to reduce internal resistance.

### BRIEF DESCRIPTION OF DRAWINGS

FIG. 1 is an axial sectional view of a cylindrical battery according to an embodiment of the present disclosure.
FIG. 2 is a perspective view of an electrode assembly.
FIG. 3 is a schematic plan view of a negative electrode when viewed from a thickness direction thereof.
FIG. 4 is a schematic diagram illustrating a position of a negative electrode lead part and an irradiation region of a laser beam when the cylindrical battery of an embodiment is viewed from a bottom of an exterior housing can.
FIG. 5A is a schematic diagram illustrating a bottom side of the cylindrical battery of FIG. 1.
FIG. 5B is a schematic diagram corresponding to FIG. 5A in a cylindrical battery of a second embodiment.
FIG. 5C is a schematic diagram corresponding to FIG. 5A in a cylindrical battery of a third embodiment.
FIG. 5D is a schematic diagram corresponding to FIG. 5A in a cylindrical battery of a fourth embodiment.
FIG. 6A is a schematic diagram corresponding to FIG. 4 illustrating an irradiation region of a laser beam of a modified example.
FIG. 6B is a schematic diagram corresponding to FIG. 4 illustrating an irradiation region of a laser beam of another modified example.
FIG. 6C is a schematic diagram corresponding to FIG. 4 illustrating an irradiation region of a laser beam of another modified example.
FIG. 7 is a schematic plan view corresponding to FIG. 3 in a negative electrode of the modified example.

### DESCRIPTION OF EMBODIMENTS

Hereinafter, an embodiment of a cylindrical battery according to the present disclosure will be described in detail with reference to the drawings. The cylindrical battery of the present disclosure may be a primary battery, or may be a secondary battery. Additionally, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of an embodiment, but the cylindrical battery of the present disclosure is not limited to this.

In a case where a plurality of embodiments and modified examples and the like are included in the following description, it is assumed from the beginning that a new embodiment is constructed by appropriately combining those feature portions. In the following embodiments, the same components are denoted by the same reference numerals in the drawings, and duplicate descriptions are omitted. Schematic diagrams are included in a plurality of the drawings, and the dimensional ratios such as lengths, widths and heights of each member between different drawings are not necessarily the same. In this specification, a sealing assembly 17 side in an axial direction (height direction) of a battery case 15 is defined as "upper", and a bottom side of an exterior housing can 16 in the axial direction is defined as "lower". Of the components described below, components that are not described in the independent claim indicating the highest level concept are arbitrary components, and are not essential components.

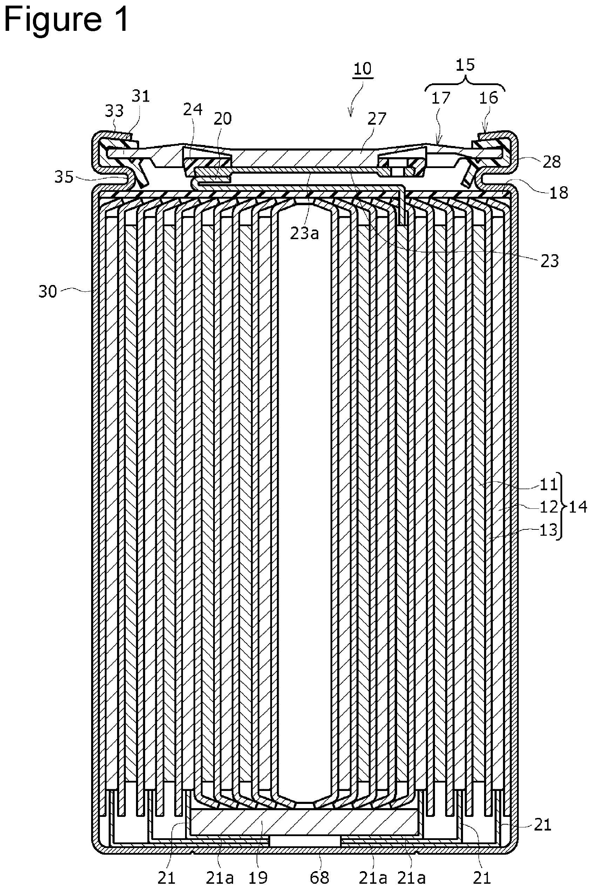

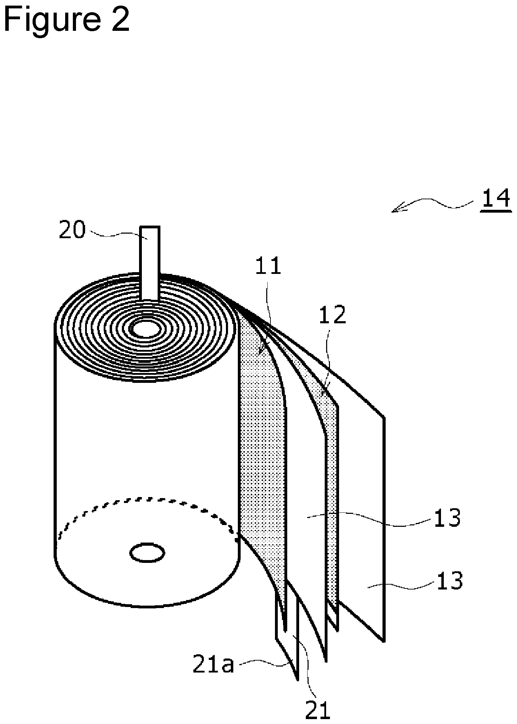

FIG. 1 is an axial sectional view of the cylindrical battery 10 according to an embodiment of the present disclosure, and FIG. 2 is a perspective view of an electrode assembly 14 of the cylindrical battery 10. As illustrated in FIG. 1, the cylindrical battery 10 comprises the wound-type electrode assembly 14, a non-aqueous electrolyte (not illustrated), and the battery case 15 that houses the electrode assembly 14 and the non-aqueous electrolyte. The electrode assembly 14 includes a positive electrode 11 serving as an example of a first electrode, a negative electrode 12 serving as an example a second electrode, and a separator 13 interposed between the positive electrode 11 and the negative electrode 12. The electrode assembly 14 has a wound structure in which the positive electrode 11 and the negative electrode 12 are wound with the separator 13 interposed therebetween. The battery case 15 includes the bottomed cylindrical exterior housing can 16 and the sealing assembly 17 that caps an opening of the exterior housing can 16. The cylindrical battery 10 comprises a resin gasket 28 disposed between the exterior housing can 16 and the sealing assembly 17.

The non-aqueous electrolyte includes a non-aqueous solvent, and an electrolyte salt dissolved in the non-aqueous solvent. Examples of the non-aqueous solvent may include esters, ethers, nitriles, amides, and mixed solvents containing two or more selected from the foregoing. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte that uses a gel polymer or the like. As the electrolyte salt, a lithium salt such as LiPF₆ is used.

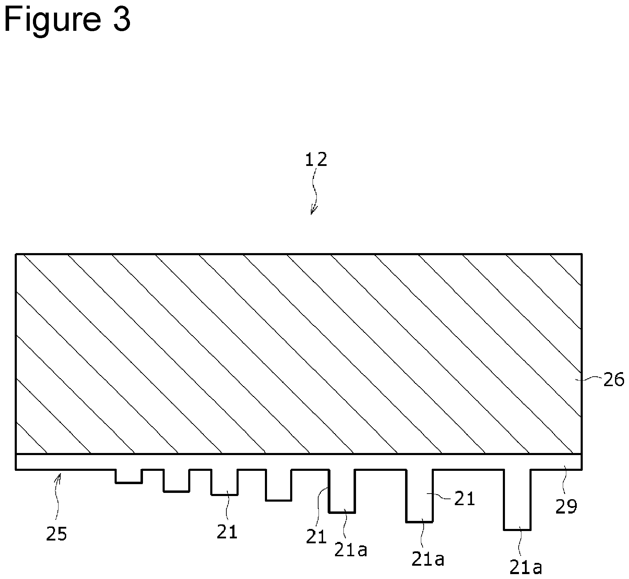

As illustrated in FIG. 2, the electrode assembly 14 has the elongated positive electrode 11, the elongated negative electrode 12, and the two elongated separators 13. A positive electrode lead 20 is bonded to the positive electrode 11, and a plurality of negative electrode lead parts 21 (only one is illustrated in FIG. 2) are electrically connected to the negative electrode 12. The negative electrode lead part 21 forms a second electrode lead part. A structure of the plurality of negative electrode lead parts 21 will be described in detail later using FIG. 3. The negative electrode 12 is formed to be one size larger than the positive electrode 11 in order to suppress precipitation of lithium, and is formed to be longer in the longitudinal direction and the width direction (short direction) than the positive electrode 11. The two separators 13 are each formed to be at least one size larger than the positive electrode 11, and are disposed so as to interpose, for example, the positive electrode 11 therebetween.

The positive electrode 11 has a positive electrode current collector and a positive electrode mixture layer formed on each surface of the positive electrode current collector. Examples of the positive electrode current collector may include a foil of metal such as aluminum or an aluminum alloy, which is stable within a potential range of the positive electrode 11, and a film in which such a metal is disposed on a surface layer thereof. The positive electrode mixture layer includes a positive electrode active material, a conductive agent, and a binder. The positive electrode 11 can be produced by, for example, applying a positive electrode mixture slurry including a positive electrode active material, a conductive agent, a binder, and the like on a positive electrode current collector, drying the resulting coating film, and then compressing the coating film to form a positive electrode mixture layer on each surface of the current collector.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of Ni, Co, Mn and Al.

Examples of the conductive agent included in the positive electrode mixture layer may include carbon materials such as carbon black, acetylene black, Ketjen black, and graphite. Examples of the binder included in the positive electrode mixture layer may include fluorocarbon resins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like.

The negative electrode 12 has a negative electrode current collector and a negative electrode mixture layer formed on each surface of the negative electrode current collector. Examples of the negative electrode current collector may include a foil of a metal such as copper or a copper alloy, which is stable within a potential range of the negative electrode 12, and a film in which such a metal is disposed on a surface layer thereof. The negative electrode mixture layer includes a negative electrode active material, and a binder. The negative electrode 12 can be produced by, for example, applying a negative electrode mixture slurry including a negative electrode active material, a binder, and the like on a negative electrode current collector, drying the resulting coating film, and then compressing the coating film to form a negative electrode mixture layer on each surface of the current collector.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. As the negative electrode active material, a silicon (Si) material containing Si may be included in the negative electrode mixture layer. As the negative electrode active material, a metal alloyed with lithium other than Si, an alloy containing such a metal, a compound containing such a metal, and the like may be used.

As the binder included in the negative electrode mixture layer, fluorocarbon resins, PAN, polyimide resins, acrylic resins, polyolefin resins, and the like may be used as in the case of the positive electrode 11, and a styrene-butadiene rubber (SBR) or a modification thereof is preferably used. In the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used as the separator 13. Specific examples of the porous sheet include a microporous thin film, a woven fabric, and a nonwoven fabric. The material of the separator 13 is preferably a polyolefin resin such as polyethylene or polypropylene, or a cellulose. The separator 13 may be either a single layer structure or a laminated structure. A heat-resistant layer or the like may be formed on a surface of the separator 13. Note that the negative electrode 12 may include a winding start end of the electrode assembly 14, but the separator 13 generally extends beyond a winding start side end of the negative electrode 12, and a winding start side end of the separator 13 serves as the winding start end of the electrode assembly 14.

As illustrated in FIG. 1, the cylindrical battery 10 further comprises an insulating plate 18 disposed on the upper side of the electrode assembly 14, and a metal plate 19 disposed on the lower side of the electrode assembly 14. The positive electrode lead 20 attached to the positive electrode 11 extends toward the sealing assembly 17 through a through hole of the insulating plate 18. The positive electrode lead 20 is connected to a lower surface of a terminal plate 23, which is a bottom plate of the sealing assembly 17, by means of welding or the like, and a sealing plate 27, which is a top plate of the sealing assembly 17 electrically connected to the terminal plate 23, serves as a positive electrode terminal.

On the hand, the plurality of negative electrode lead parts 21 pass radially outside the metal plate 19, and then are folded back radially inward. A tip portion 21a of each negative electrode lead part 21 is located between the metal plate 19 and a bottom 68 of the exterior housing can 16. The bottom 68, the tip portion 21a of each negative electrode lead part 21, and the metal plate 19 are bonded to one another, and the exterior housing can 16 serves as a negative electrode terminal.

The exterior housing can 16 is a metal container having a bottomed cylindrical portion. A portion between the exterior housing can 16 and the sealing assembly 17 is sealed with the annular gasket 28, and an internal space of the battery case 15 is closed. The gasket 28 is held between the exterior housing can 16 and the sealing assembly 17, and insulates the sealing assembly 17 from the exterior housing can 16. That is, the gasket 28 has a role of a seal material for maintaining the airtightness of the inside of the battery, and a role as an insulating material for insulating the sealing assembly 17 from the exterior housing can 16.

The exterior housing can 16 has an annular grooved portion 35 in one part in the height direction of a cylindrical outer circumferential surface of the exterior housing can 16. The grooved portion 35 can be formed by, for example, recessing the one part of the cylindrical outer circumferential surface toward the radially inward side by a radially inward spinning process. The exterior housing can 16 has a bottomed cylindrical portion 30 including the grooved portion 35 and an annular shoulder 33. The bottomed cylindrical portion 30 houses the electrode assembly 14 and the non-aqueous electrolyte, and the shoulder 33 is bent to the radially inward side from an end of the bottomed cylindrical portion 30 on the opening side to extend radially inward. The shoulder 33 is formed when an upper end of the exterior housing can 16 is bent to the inner side to be caulked to a circumferential edge 31 of the sealing assembly 17. The sealing assembly 17 is fixed by caulking to the exterior housing can 16 with the gasket 28 interposed between the shoulder 33 and the grooved portion 35.

### [Cylindrical Battery of Example]

Next, an example of a method of producing the above-described cylindrical battery 10 will be specifically described.

### <Production of Positive Electrode>

As the positive electrode active material, LiNi_{0.8}CO_{0.15}Al_{0.05}O₂ was used. The positive electrode active material of 100 parts by mass, polyvinylidene fluoride of 1.7 parts by mass as the binder, and acetylene black of 2.5 parts by mass as the conductive agent were mixed into a liquid component to prepare a positive electrode mixture paste. The obtained positive electrode mixture paste was applied to each surface of the positive electrode current collector constituted by an aluminum foil excluding the positive electrode lead connection portion and dried, and then the positive electrode mixture paste was rolled to have a predetermined thickness to obtain the positive electrode. The obtained positive electrode was cut to a predetermined size and the positive electrode lead made of Al was connected to an exposed portion of the current collector with ultrasonic welding.

### <Production of Negative Electrode>

As the negative electrode active material, the easily graphitizable carbon was used. A negative electrode paste was obtained by stirring the negative electrode active material of 100 parts by mass, polyvinylidene fluoride of 0.6 parts by mass as the binder, carboxymethyl cellulose of 1 part by mass as the thickener, and an appropriate amount of water by using a twin-arm kneader. The obtained negative electrode mixture paste was applied to each surface of the elongated negative electrode current collector constituted by a copper foil. A non-applied portion to which the negative electrode paste was not applied was provided in a predetermined region in the width direction in each side of the elongated negative electrode current collector when the negative electrode mixture paste was applied to each surface of the negative electrode current collector. Subsequently, each surface of the negative electrode current collector was dried, and then rolled to have a predetermined thickness to obtain the negative electrode. Then, the obtained negative electrode was cut to a predetermined size to form a non-applied portion on one side in the width direction of the negative electrode. Thereafter, the non-applied portion constituted by a copper foil was subjected to a press-punching process to form the plurality of negative electrode lead parts 21 constituted by one part of the non-applied portion.

FIG. 3 is a schematic plan view of the produced negative electrode 12 when viewed from a thickness direction thereof, and is a schematic plan view for illustrating a structure of the negative electrode lead parts 21. Note that in FIG. 3, an end on the left side of the drawing sheet is defined as a winding start end. As illustrated in FIG. 3, the negative electrode 12 comprises the negative electrode current collector 25 and the negative electrode mixture layer 26 provided on each side of the negative electrode current collector 25. The non-applied portion 29 in which the negative electrode current collector 25 is exposed is provided on one side in the width direction of the negative electrode 12. A part of the non-applied portion 29 protrudes in the width direction of the negative electrode 12, so that a plurality of negative electrode lead parts 21 are formed. That is, the plurality of negative electrode lead parts 21 are formed by a metal foil (copper foil in the present embodiment) constituting the negative electrode current collector 25. The plurality of negative electrode lead parts 21 are formed integrally with the negative electrode current collector 25 by the above-described press-punching process.

The plurality of negative electrode lead parts 21 are disposed to be spaced from each other in the longitudinal direction of the negative electrode 12. In the present embodiment, the negative electrode lead part 21 does not exist at an end on the winding start side in the longitudinal direction, but, alternatively, may be disposed at an end on the winding start side or on the winding finish side in the longitudinal direction. An interval (pitch) in the longitudinal direction between the adjacent two negative electrode lead parts 21 increases toward the winding finish side in the longitudinal direction. The lengths of the negative electrode lead parts 21 increase toward the winding finish side in the longitudinal direction. In this way, as illustrated in FIG. 1, when the negative electrode lead parts 21 are folded back radially inward, the tip portions 21a of all the negative electrode lead parts 21 are located at the substantially radial positions. Then, the tip portions 21a of the negative electrode lead parts 21 are welded to the bottom 68 of the exterior housing can 16 so that the tip portions 21a of the negative electrode lead parts 21 can be easily aligned at the time of laser welding, described later. At this time, the tip portions 21a of all the negative electrode lead parts 21 are not necessarily required to be bonded to the bottom 68 of the exterior housing can 16. It is sufficient to bond the tip portion 21a of at least one negative electrode lead part 21 to the bottom 68 of the exterior housing can 16, and this makes it possible to electrically connect the tip portions 21a of all the negative electrode lead parts 21 to the bottom of the exterior housing can 16 by bonding the tip portions 21 of the negative electrode lead parts 21 to one another. Note that the interval (pitch) in the length direction of the adjacent two negative electrode lead parts 21 may be the same among two or more sets of adjacent two negative electrode lead parts 21. The plurality of negative electrode lead parts 21 may include two or more negative electrode lead parts having the same length.

### <Preparation of Non-Aqueous Electrolytic Solution>

In the mixed solvent of ethylene carbonate (EC), diethyl carbonate (DEC) and ethylmethyl carbonate (EMC), lithium hexafluorophosphate (LiPF₆) as an electrolyte was dissolved to 1.0 mol/L, thereby preparing a non-aqueous electrolytic solution.

### <Preparation of Sealing Assembly>

A thinner portion 23a (see FIG. 1) was provided at a center of the metal terminal plate 23 having a circular shape in a plan view, and then the terminal plate 23, an annular insulating plate 24 (see FIG. 1), and the sealing plate 27 were integrated together, thereby producing the sealing assembly 17. The thinner portion 23a was bonded to the center of the lower surface of the sealing plate 27 by welding.

### <Production of Battery>

The positive electrode 11 and the negative electrode 12 were spirally wound with the separator made of a polyolefin resin interposed therebetween, thereby producing the electrode assembly 14. The metal plate 19 made of nickel was disposed on an end surface of the electrode assembly 14 from which the negative electrode lead parts 21 were led out, and the negative electrode lead parts 21 were bent so that the tip portions 21a extended along the lower surface of the metal plate 19. Subsequently, the electrode assembly 14 was inserted into the exterior housing can 16 and a laser beam was emitted in an axial direction from outside of the bottom 68 of the exterior housing can 16 to laser weld the negative electrode lead parts 21 to the exterior housing can 16. The laser welding can be performed under the condition that it has been previously used for the welding of the cylindrical battery. The wavelength and intensity of the laser beam used for laser welding can be appropriately changed on the basis of the thickness or the like of the exterior housing can 16. The laser welding was performed to bond the bottom 68 of the exterior housing can 16, the tip portions 21a of the plurality of negative electrode lead parts 21, and the metal plate 19 to integrate them together. At this time, the tip portions 21a of all the negative electrode lead parts 21 need not be directly bonded to the bottom 68 of the exterior housing can 16. It is sufficient to integrate the plurality of negative electrode leads 21 together by laser welding and bond at least one negative electrode lead 21 to the bottom 68 of the exterior housing can 16, and this makes it possible to electrically connect all the negative electrode leads 21 to the bottom 68 of the exterior housing can 16.

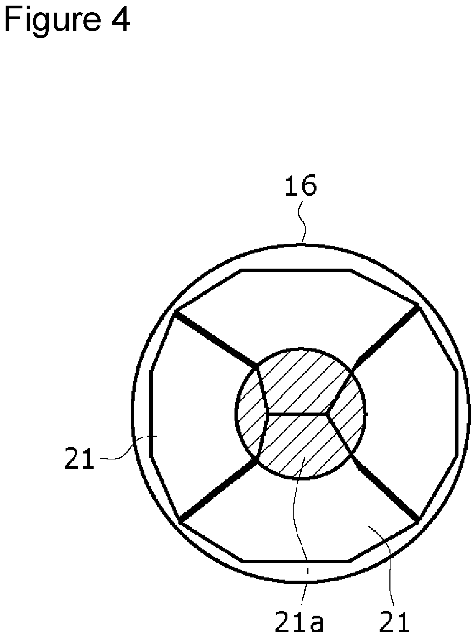

FIG. 4 is a schematic diagram illustrating a position of the negative electrode lead part 21 and an irradiation region of a laser beam when the cylindrical battery 10 is viewed from the bottom 68. Note that in FIG. 4, a region indicated by diagonal lines represents an irradiation region of a laser beam. As illustrated in FIG. 4, in this example, the plurality of negative electrode lead parts 21 were bent radially inward from the multiple directions, for example, so that four negative electrode lead parts 21 were located closest to the can bottom through a slight gap in the circumferential direction. The plurality of negative electrode lead parts 21 extended radially to near the radial center. The irradiation region of the laser beam had a circular shape (point shape) and the laser beam was emitted to the circular region centered on the radial center of the exterior housing can 16 and having a radius of a predetermined size.

In this way, the bottom 68 of the exterior housing can 16, the plurality of negative electrode lead parts 21, and the metal plate 19 were bonded to one another. Thereafter, the positive electrode lead 20 connected to the positive electrode 11 was electrically connected to the sealing assembly 17 by welding. Next, after the electrolytic solution was injected into the exterior housing can 16, the sealing assembly 17 was inserted into the exterior housing can 16, and an opening end of the exterior housing can 16 was caulked to the sealing assembly 17, thereby producing the cylindrical battery 10 of the example.

### [Essential Configuration of Cylindrical Battery of the Present Disclosure and Operational Effects Thereof]

The cylindrical battery 10 of the present disclosure comprises the bottomed cylindrical exterior housing can 16, the electrode assembly 14 that is housed in the exterior housing can 16 and in which the elongated positive electrode 11 (first electrode) and the elongated negative electrode 12 (second electrode) are wound with the separator 13 interposed between the positive electrode 11 and the negative electrode 12, and the metal plate 19 disposed between the bottom 68 of the exterior housing can 16 and the electrode assembly 14. The cylindrical battery 10 comprises the plurality of negative electrode lead parts 21 (second electrode lead parts) extending from the negative electrode 12 toward the bottom 68. The tip portion 21a of each negative electrode lead part 21 is sandwiched between the metal plate 19 and the bottom 68 and is electrically connected to the bottom 68.

Accordingly, the plurality of negative electrode lead parts 21 are electrically connected to the exterior housing can 16 not via the metal plate 19, which makes it possible to reduce a resistance loss of a pathway from the negative electrode 12 to the exterior housing can 16 and to reduce power loss. At least one negative electrode lead part 21 and the bottom 68 can be bonded to each other in a state in which the plurality of negative electrode lead parts 21 are sandwiched between the metal plate 19 and the bottom 68, whereby the bonding can be reliably performed. When the laser welding is used as the bonding method, the metal plate 19 can be used as a receiver of the laser welding. That is, when the negative electrode lead parts 21 and the bottom 68 are bonded to each other by emitting the laser beam from outside of the can bottom, a spatter occurs, but the spatter can be received by the metal plate 19, which makes it possible to substantially prevent or prevent the spatter from being scattered on the electrode assembly 14 side. Therefore, this makes it possible to substantially prevent the spatter from entering the electrode assembly, thereby producing the cylindrical battery 10 with high quality.

### [Cylindrical Battery Configuration Preferable for Adoption and Operational Effects Thereof]

The plurality of negative electrode lead parts 21 are preferably constituted by a metal foil which is the same as the metal foil constituting the negative electrode current collector 25.

The above-described configuration makes it possible to configure the plurality of negative electrode lead parts 21 readily at a low cost.

At least one of the plurality of negative electrode lead parts 21 is preferably bonded to the metal plate 19.

The above-described configuration makes it possible to electrically connect the plurality of negative electrode lead parts 21 to the exterior housing can 16 more reliably. The metal plate 19 can be fixed inside the exterior housing can 16.

The plurality of negative electrode lead parts 21 and the bottom 68 are preferably electrically connected by the laser beam emitted from outside of the exterior housing can 16.

### [Other Embodiments, and Modified Examples]

The present disclosure is not limited to the above embodiment and modified examples thereof, and various improvements and changes are possible within the matters described in the claims of the present application and the scope of equivalence of claims.

For example, in the above embodiment, the metal plate 19 and the bottom 68 of the exterior housing can 16 are not directly connected to each other, but, alternatively, the metal plate and the bottom of the exterior housing can may be directly bonded to each other.

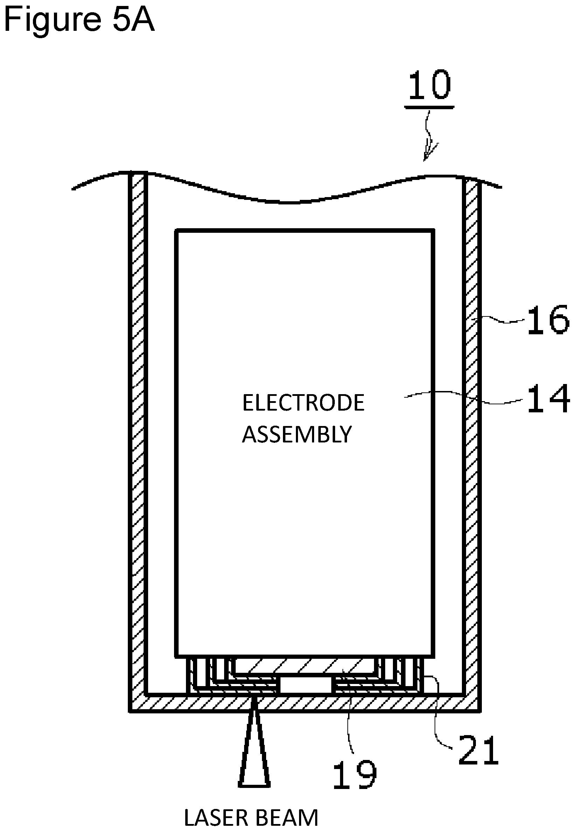

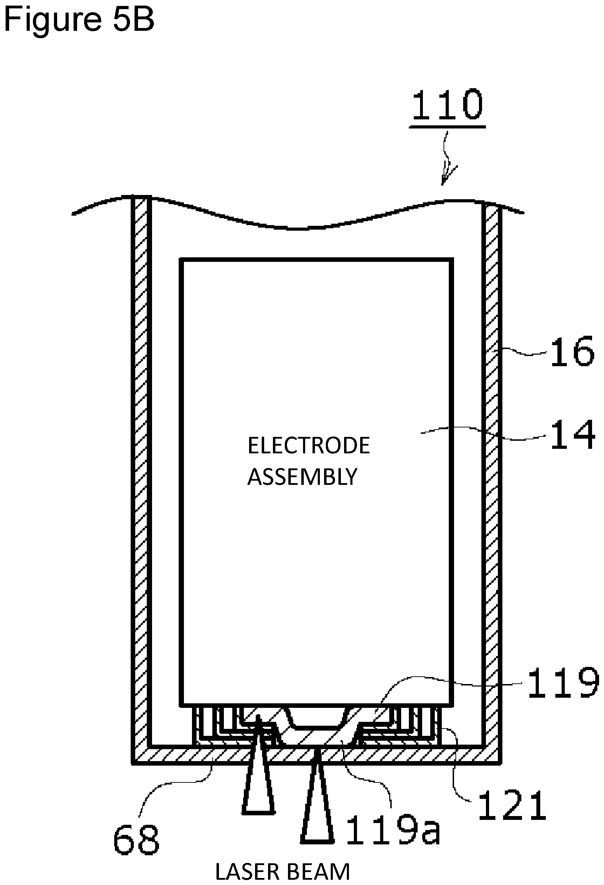

FIG. 5A is a schematic diagram illustrating the bottom 68 side of the cylindrical battery 10. FIG. 5B is a schematic diagram corresponding to FIG. 5A in a cylindrical battery 110 of a second embodiment. At this time, as illustrated in FIG. 5B, the length of each negative electrode lead part 121 is slightly reduced so that each negative electrode lead part 121 can only reach a predetermined region radially inside of the metal plate 119, and each negative electrode lead part 121 need not reach the radial center. A protrusion 119a that protrudes downward at a radial center and cannot be reached by each negative electrode lead part 121 may be provided below the center of the metal plate 119. The protrusion 119a and the bottom 68 of the exterior housing can 16 may be laser welded by a laser beam emitted from the lower side of the exterior housing can 16. According to this configuration, the bottom 68 and the metal plate 119 can be reliably bonded to each other, and the plurality of negative electrode lead parts 121 and the exterior housing can 16 can be electrically connected to each other more reliably. The positioning of the metal plate 119 in the exterior housing can 16 can be performed reliably.

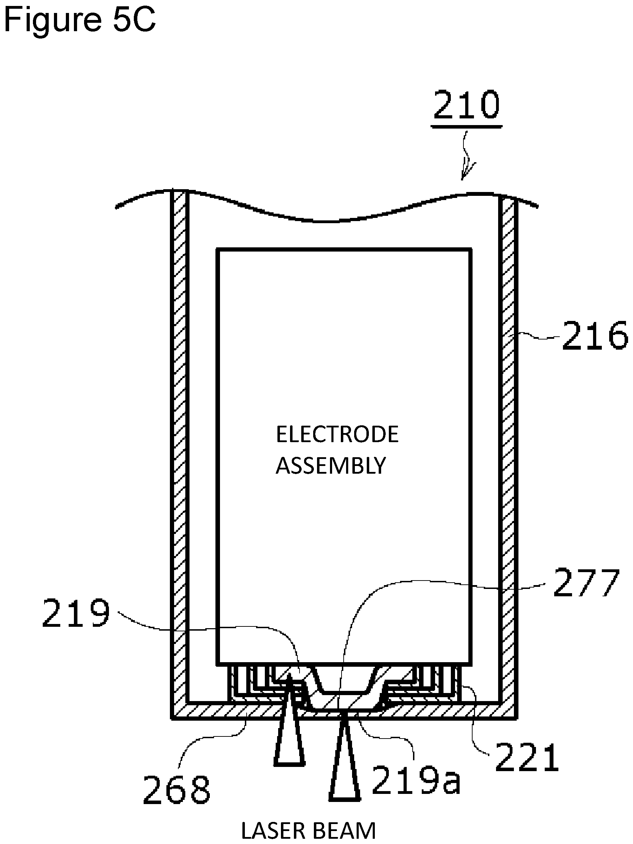

As illustrated in FIG. 5C, i.e., a schematic diagram corresponding to FIG. 5A in a cylindrical battery 210 of a third embodiment, each negative electrode lead part 221 need not reach the radial center. A protrusion 219a that protrudes downward may be provided below the center of the metal plate 219. Then, a recess 277 having a shape corresponding to the shape of the protrusion 219a may be provided in an inner surface of a bottom 268 of an exterior housing can 216 so that the protrusion 219a is fitted into the recess 277.

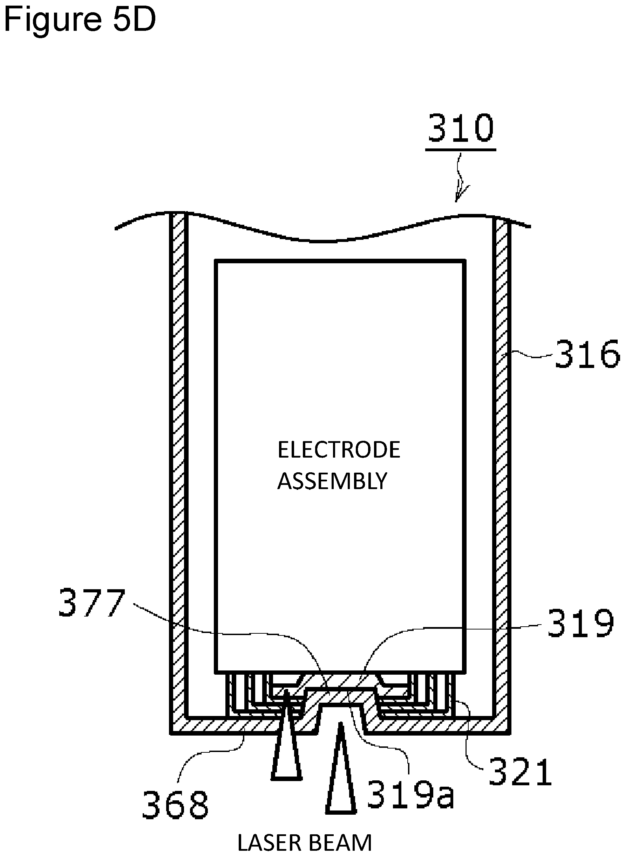

Alternatively, as illustrated in FIG. 5D, i.e., a schematic diagram corresponding to FIG. 5A in a cylindrical battery 310 of a fourth embodiment, each negative electrode lead part 321 need not reach the radial center. A recess 319a that is recessed upward may be provided in a lower center of the metal plate 319. Then, a projection 377 having a shape corresponding to the shape of the recess 319a may be provided in an inner surface of a bottom 368 of an exterior housing can 316 so that the projection 377 is fitted into the recess 319a. As in these embodiments, a recess and a protrusion are formed in the metal plate 219, 319 and the bottom 268, 368 of the exterior housing can 216, 316, thereby improving contact of the metal plate 219, 319 with the bottom 268, 368. Therefore, the weld stability can be further improved, and the positioning of the metal plate 219, 319 can be performed accurately.

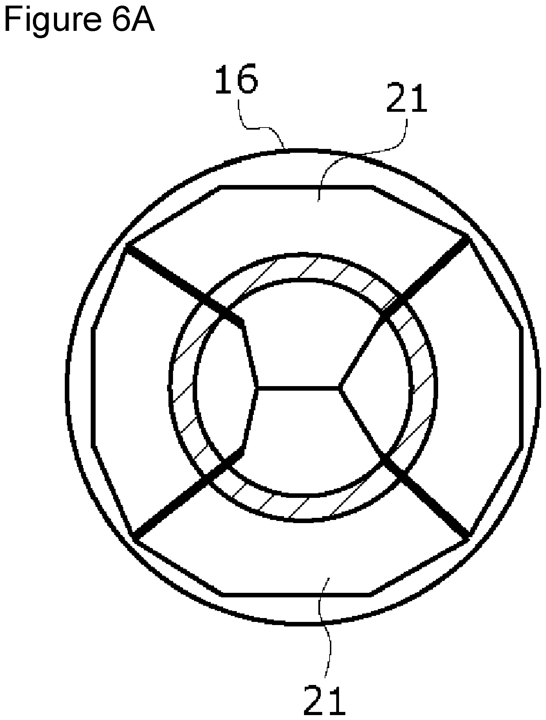

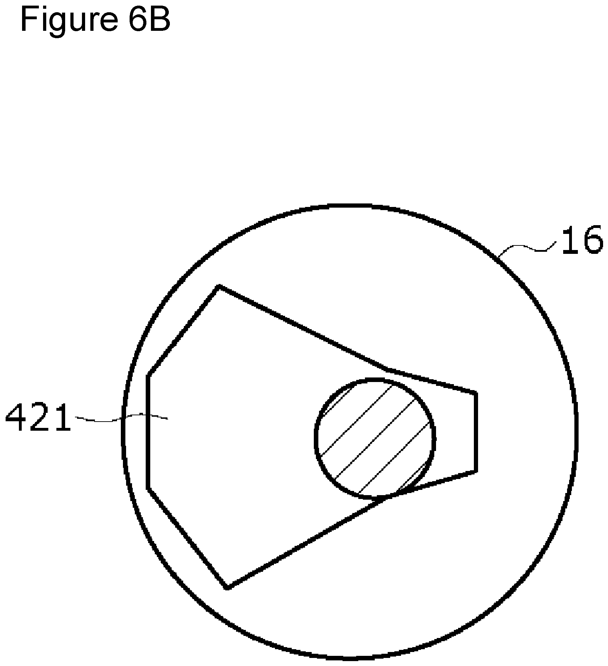

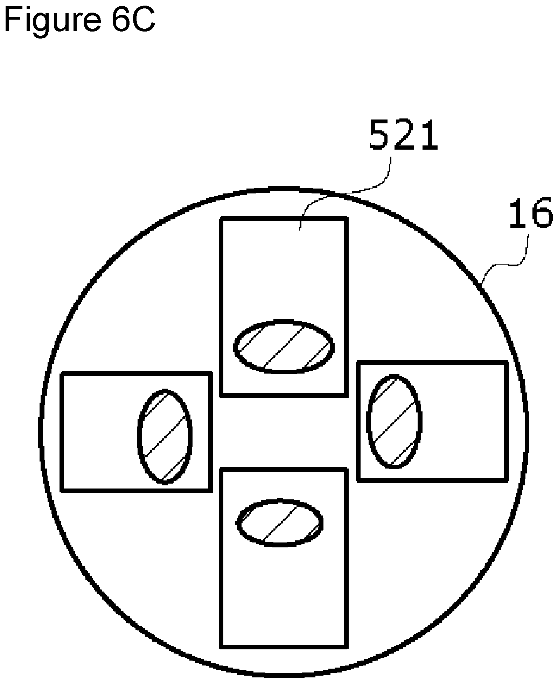

FIG. 6A is a schematic diagram corresponding to FIG. 4 illustrating an irradiation region of a laser beam of a modified example, and FIGS. 6B and 6C each are a schematic diagram corresponding to FIG. 4 illustrating an irradiation region of a laser beam of another modified example. In FIGS. 6A, 6B, and 6C, a region indicated by diagonal lines represents an irradiation region of a laser beam. As illustrated in FIG. 6A, the laser welding may be performed by emitting the laser beam from outside of the can bottom to draw a ring shape. As illustrated in FIG. 6B, the plurality of negative electrode lead parts 421 may be bent only from one direction and the laser beam may be emitted. As illustrated in FIG. 6C, the irradiation region of the laser beam may be provided at a plurality of positions according to the positions at which the plurality of negative electrode lead parts 521 are bent.

In the example, the plurality of negative electrode lead parts 21 were integrally formed with the negative electrode current collector 25 by subjecting the metal foil to the press punching process. However, the plurality of negative electrode parts may be formed by cutting out the metal foil using the laser beam.

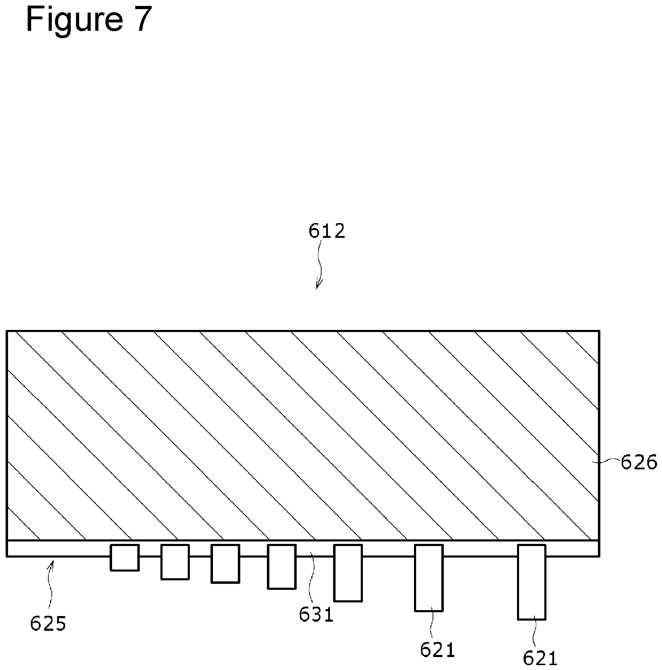

Alternatively, as illustrated in FIG. 7, i.e., a schematic plan view corresponding to FIG. 3 in a negative electrode 612 of the modified example, a plurality of negative electrode lead parts 621 may be formed by bonding a plurality of lead plates made of metal (e.g., copper) to a non-applied portion 631 adjacent in the width direction to a negative electrode mixture layer 626 in a negative electrode current collector 625.

The bottom 68 of the exterior housing can 16 is welded by laser welding, but alternatively, the bottom of the exterior housing can may be welded by resistance welding or ultrasonic welding. As a material of the metal plate 19, nickel is used, but, alternatively, as a material of the metal plate, a material plated with nickel on cast iron, copper, or iron, may be used, for example.

In the electrode assembly 14, the length in the axial direction of the separator 13 is longer than the length in the axial direction of the positive electrode 11 and the length in the axial direction of the negative electrode 12. Accordingly, even when the metal plate 19 is disposed on the lower side of the electrode assembly 14, the separator 13 prevents a short circuit between the positive electrode 11 and the negative electrode 12 via the metal plate 19. However, an insulating layer is preferably disposed between the metal plate 19 and the electrode assembly 14. Examples of the insulating layer include an insulating plate, an insulating tape, and an insulating coating film.

In order to reduce the electric resistance of a pathway electrically connecting the electrode assembly and the exterior housing can, the negative electrode lead parts preferably protrude from the winding start end in the longitudinal direction of the negative electrode. For example, the negative electrode lead part formed on the winding start side in the longitudinal direction of the negative electrode is folded back radially outward to extend along the upper surface of the metal plate, and subsequently, is folded back radially inward to extend along the lower surface of the metal plate, thereby enabling electrical connection with the bottom of the exterior housing can.

Alternatively, in the metal plate, a through hole may be provided at a position overlapping with a hollow of the electrode assembly in the axial direction. Then, one or more negative electrode lead parts that protrude from the winding start side in the longitudinal direction of the negative electrode may be welded to the bottom of the exterior housing can after passing through the through hole in the metal plate.

As an embodiment of the present disclosure, there has been described a case where the second electrode electrically connected to the exterior housing can 16 is a negative electrode. However, alternatively, the first electrode may be a negative electrode, and the second electrode may be a positive electrode. In this case, the exterior housing can serves as the positive electrode terminal.

### REFERENCE SIGNS LIST

10, 110, 210, 310 Cylindrical battery, 11 Positive electrode, 12, 612 Negative electrode, 13 Separator, 14 Electrode assembly, 15 Battery case, 16, 216 Exterior housing can, 17 Sealing assembly, 18 Insulating plate, 19, 119, 219, 319 Metal plate, 20 Positive electrode lead, 21, 121, 221, 321, 421, 521, 621 Negative electrode lead part, 21a Tip portion, 23 Terminal plate, 23a Thinner portion, 24 Insulating plate, 25, 625 Negative electrode current collector, 26, 626 Negative electrode mixture layer, 27 Sealing plate, 28 Gasket, 29 Non-applied portion, 30 Bottomed cylindrical portion, 31 Circumferential edge, 33 Shoulder, 35 Grounded portion, 39 Band-like portion, 68, 268 Bottom, 119a, 219a Protrusion, 277 Recess, 319a Recess, 377 Projection, 631 Non-applied portion

## Claims

1. A cylindrical battery, comprising:
a bottomed cylindrical exterior housing can;
an electrode assembly that is housed in the exterior housing can, and in which an elongated first electrode and an elongated second electrode having different polarities from each other are wound with a separator interposed between the first electrode and the second electrode;
a metal plate that is disposed between a bottom of the exterior housing can and the electrode assembly; and
a plurality of second electrode lead parts that extend from the second electrode toward the bottom, wherein
a tip portion of each second electrode lead part is sandwiched between the metal plate and the bottom and is electrically connected to the bottom.

2. The cylindrical battery according to claim 1, wherein
the plurality of second electrode lead parts are formed of a metal foil constituting a current collector of the second electrode.

3. The cylindrical battery according to claim 1 or 2, wherein
at least one of the plurality of second electrode lead parts is bonded to the metal plate.

4. The cylindrical battery according to any one of claims 1 to 3, wherein
an insulating layer is disposed between the metal plate and the electrode assembly.

5. The cylindrical battery according to any one of claims 1 to 4, wherein
the metal plate is bonded to the bottom not via the second electrode lead part.

6. The cylindrical battery according to any one of claims 1 to 5, wherein
the plurality of second electrode lead parts and the bottom are electrically connected to each other by a laser beam emitted from outside of the exterior housing can.

7. A method of producing the cylindrical battery according to any one of claims 1 to 5, the method including the step of
electrically connecting the plurality of second electrode lead parts and the bottom by emitting a laser beam from outside of the exterior housing can.
